# EUROPEAN PATENT SPECIFICATION

(11) **EP 3 826 964 B1**
(45) Date of publication and mention of the grant of the patent: **17.09.2025**
(21) Application number: 19740590.5
(22) Date of filing: 23.07.2019
(51) Int. Cl.: C02F 1/28, B01J 20/28, B01J 20/04, B01J 20/30, B01J 20/32, C02F 103/10, C02F 103/14, C02F 103/22, C02F 103/28, C02F 103/32, C02F 101/20, C02F 101/22

(54) **USE OF A PARTICULATE MINERAL MATERIALS FUNCTIONALIZED WITH REDUCING AGENTS FOR LOWERING THE AMOUNT OF HEAVY METAL CONTAMINANTS FROM AN AQUEOUS MEDIUM**
VERWENDUNG VON TEILCHENFÖRMIGEN MINERALISCHEN MATERIALIEN, DIE MIT REDUKTIONSMITTELN FUNKTIONALISIERT SIND, UM DIE MENGE AN SCHWERMETALLVERUNREINIGUNGEN AUS EINEM WÄSSRIGEN MEDIUM ZU REDUZIEREN
UTILISATION DES MATIÈRES MINÉRALES PARTICULAIRES FONCTIONNALISÉS COMPORTANT DES AGENTS DE RÉDUCTION PERMETTANT DE RÉDUIRE LA QUANTITÉ DE CONTAMINANTS DE TYPE MÉTAL LOURD D'UN MILIEU AQUEUX

(30) Priority: 24.07.2018 EP 18185368
(43) Date of publication of application: 02.06.2021
(73) Proprietor: Omya International AG, 4665 Oftringen (CH)
(72) Inventor: KELLER, Tobias, 5722 Gränichen (CH); FTOUNI, Jamal, 4800 Zofingen (CH); RENTSCH, Samuel, 3095 Spiegel bei Bern (CH)
(74) Representative: Maiwald GmbH
(86) International application number: PCT/EP2019/069774
(87) International publication number: WO 2020/020874

(56) References cited:
- EP-A1- 1 974 806
- EP-A1- 2 080 738
- EP-A1- 3 192 838
- WO-A1-2018/019699
- US-A1- 2012 145 640

## Description

The present invention relates to the use of a particulate mineral material being functionalized with one or more reducing agents for lowering the amount of heavy metal contaminants from an aqueous medium. Furthermore, the present invention relates to a corresponding process for lowering the amount of heavy metal contaminants from an aqueous medium as well as to a functionalized particulate mineral material. Additionally, the present invention relates to a process for preparing a functionalized particulate mineral material and to a scavenging complex.

Many industries discharge large amounts of heavy metal-contaminated wastewater bearing heavy metals, such as Pb, Zn, Mn, Cd, Cr, Hg, As, Se and Ni. Because of their high solubility in aqueous mediums and since heavy metal contaminants are non-biodegradable, they can be scavenged by living organisms. Once they enter the food chain, large concentrations of heavy metals may accumulate in the human body. If the metals are ingested beyond the permitted concentration, they can cause serious health disorders. Serious health effects include reduced growth and development, cancer, organ damage, nervous system damage, and in extreme cases, death. Exposure to some metals, such as mercury and lead, may also cause development of autoimmunity, in which a person's immune system attacks its own cells. This can lead to joint diseases such as rheumatoid arthritis, and diseases of the kidneys, circulatory system, nervous system, and damaging of the fetal brain. At higher doses, heavy metals can cause irreversible brain damage.

Wastewater streams containing heavy metals are produced from different industries. For example, electroplating and metal surface treatment processes generate significant quantities of wastewaters containing heavy metals. Other sources for metal wastes include the wood processing industry, where arsenic-containing wastes are produced, and the petroleum refining which generates conversion catalysts contaminated with chromium. All of these and other industries produce a large quantity of wastewaters and sludges that requires extensive waste treatment.

Wastewater regulations were established to minimize human and environmental exposure to hazardous chemicals. This includes limits on the types and concentration of heavy metals that may be present in the discharged wastewater. Therefore, it is necessary to remove or minimize the heavy metal contaminants in wastewater systematically by treating heavy metal-contaminated wastewater prior to its discharge to the environment.

Principally, several methods for the heavy metal removal from metal-contaminated wastewater are known in the art. The conventional processes for removing heavy metals from wastewater include e.g. chemical precipitation, flotation, adsorption, ion exchange, electrochemical deposition and reduction processes. Chemical precipitation is the most widely used for heavy metal removal and may be most preferred as no or only limited technical equipment is required for carrying the process. Ion exchange is another method being used in the industry for the removal of heavy metals from waste water or sludges. Electrolytic recovery or electro-winning is another technology used to remove metals from process water streams. This process uses electricity to pass a current through an aqueous metal-bearing solution containing a cathode plate and an insoluble anode. Positively charged metallic ions cling to the negatively charged cathodes leaving behind a metal deposit that is strippable and recoverable. Reduction processes refer to the reduction of the heavy metal contaminants from higher oxidation states to lower oxidation states since often the lower oxidation states are less toxic than the higher oxidation states and enhance the scavenging of the species on the minerals.

Over the last years and decades, environmental regulations have become more and more stringent, requiring an improved quality of treated effluent. Therefore, many of the known methods may no longer be efficient enough or are too costly due to the technique or the materials employed for the removal below the required level.

Although, many functionalized materials are known in the art, these materials are often designed for other purposes or are used in other fields. Exemplarily, reference is made to EP 3 192 839 A1, which describes a process for the surface-treatment of a calcium carbonate-comprising material, which involves the adjustment of the pH-value of an aqueous suspension of at least one calcium carbonate-comprising material to a range from 7.5 to 12 and the addition of at least one surface-treatment agent to the aqueous suspension. Said surface-treatment agent is a silane compound as specified in EP 3 192 839 A1. Further, relevant prior art documents are EP 2 080 738 A1, US 2012/145640 A1, EP 1 974 806 A1, WO 2018/019699 A1.

In view of the foregoing, there is an ongoing need for the development of new efficient treatment technologies, which allow for the treatment of wastewater containing heavy metals. In this context, the efficiency of the heavy metal removal is very important for the suitability of any new method. Obviously, also the costs for the application of any new technology are crucial. Thus, especially precipitation or adsorption techniques would be advantageous.

One or more of the foregoing and other problems are solved by the subject-matter as defined herein in the independent claims.

According to a first aspect, the present invention relates to the use of a particulate mineral material being functionalized with one or more reducing agents for lowering the amount of heavy metal contaminants from an aqueous medium, wherein the mineral material is selected from the group consisting of hydromagnesite, calcium carbonate containing particulate material, bentonite, brucite, magnesite, dolomite and mixtures thereof, and wherein the reducing agent is selected from the group consisting of Fe(II) salts, Mn(II) salts, Co(II) salts, elemental Mg, elemental Ag, elemental Sn, elemental Al, elemental Cu, elemental Fe and mixtures thereof.

The inventors surprisingly found that it is possible to significantly improve the heavy metal scavenging efficiency of particulate mineral materials by specifically functionalizing or modifying particulate mineral materials and especially the surface of said mineral material. The particulate mineral material to be used according to the present invention must be selected from the group consisting of hydromagnesite, calcium carbonate containing particulate material, bentonite, brucite, magnesite, dolomite and mixtures thereof. The surface of the particulate mineral material according to the present invention is functionalized with one or more reducing agents selected from the group consisting of Fe(II) salts, Mn(II) salts, Co(II) salts, elemental Mg, elemental Ag, elemental Sn, elemental Al, elemental Cu, elemental Fe and mixtures thereof. This functionalization boosts the scavenging efficiency of the particulate mineral material and allows removing the scavenged metal(ions) from the system. Additionally, the reducing agent immobilized on the surface of the particulate mineral material reduces the heavy metal contaminants prior to or during scavenging from a higher oxidation state to a lower oxidation state. By using the functionalized particulate mineral material according to the present invention it is possible to reduce the heavy metal contaminants in the aqueous medium and scavenge and remove them. The reducing agent is immobilized on the surface of the particulate mineral material.

The corresponding process of reducing and scavenging and removing the "loaded" particulate mineral material can be carried out in water, i.e. the one or more reducing agents remain on the surface of said particulate mineral material in water, which renders the invention especially suitable for the treatment of all kinds of heavy metal containing aqueous mediums, like wastewater or sludges.

Preferred embodiments of the inventive use are defined herein in the dependent claims.

According to one embodiment of the present invention, the heavy metal contaminants are in the form of cationic heavy metal ions and/or in the form of an anionic compound comprising said heavy metal.

According to another embodiment of the present invention the aqueous medium is selected from sewage water, preferably industrial sewage water, waste water, preferably waste water from the paper industry, waste water from the colour-, paints-, or coatings industry, waste water from breweries, waste water from the leather industry, agricultural waste water or slaughterhouse waste water, from sludge, preferably sewage sludge, harbour sludge, river sludge, coastal sludge, digested sludge, mining sludge, municipal sludge, civil engineering sludge, sludge from oil drilling or the effluents the aforementioned dewatered sludges.

According to the present invention the reducing agent is selected from the group consisting of Fe(II) salts, Mn(II) salts, Co(II) salts and mixtures thereof and preferably the group of Fe(II) salts and the anion is selected from SO₄²⁻, C₂O₄²⁻, (NO₃)⁻, Cl⁻, Br⁻, OH⁻ or mixtures thereof, more preferably the anion is SO₄²⁻, and most preferably the salt is FeSO₄.

According to another embodiment of the present invention the functionalized particulate mineral material comprises the reducing agent in an amount of 1 to 50 wt.-%, based on the total dry weight of the particulate mineral material, preferably 5 to 30 wt.-% and more preferably 10 to 20 wt.-%.

According to another embodiment of the present invention the particulate mineral material is selected from hydromagnesite, calcium carbonate containing particulate material or mixtures thereof, preferably is a calcium carbonate containing particulate material, more preferably is selected from SRCC, GCC, PCC or mixtures thereof and most preferably is GCC.

According to another embodiment of the present invention the particulate mineral material prior to functionalization with said one or more reducing agents has a median particle diameter *d*₅₀ value of between 0.01 µm and 500 µm, preferably between 0.1 µm and 250 µm, more preferably between 0.5 µm and 150 µm and most preferably between 1 µm and 100 µm and/or
the particulate mineral material prior to functionalization with said one or more reducing agents has a specific surface area of from 0.5 to 250 m²/g, more preferably from 1 to 200 m²/g, even more preferably from 4 to 150 m²/g and most preferably from 10 to 80 m²/g.

According to another embodiment of the present invention the heavy metal contaminant is in the form of an anionic compound comprising said heavy metal wherein the heavy metal in the anionic compound is selected from the group consisting of Hg, Cr, As, Se, Mn and mixtures thereof, preferably is Hg(II), Cr(VI), As(V), Mn(VII), Se(VI) or mixtures thereof, even more preferably the anionic compound is CrO₄²⁻, Cr₂O₇²⁻, Cr₃O₁₀²⁻, Cr₄O₁₃²⁻, AsO₄³⁻, MnO₄²⁻, SeO₄²⁻, mixtures thereof and/or protonated versions thereof and most preferably is CrO₄²⁻, AsO₄³⁻, and/or protonated versions thereof.

Another aspect of the present invention relates to a process for lowering the amount of heavy metal contaminants from an aqueous medium comprising the steps:
a) Providing an aqueous medium comprising heavy metal contaminants;
b) Functionalizing a particulate mineral material with one or more reducing agents selected from the group consisting of Fe(II) salts, Mn(II) salts, Co(II) salts, elemental Mg, elemental Ag, elemental Sn, elemental Al, elemental Cu, elemental Fe and mixtures thereof, wherein the mineral material is selected from the group consisting of hydromagnesite, calcium carbonate containing particulate material, bentonite, brucite, magnesite, dolomite and mixtures thereof;
c) Adding the functionalized particulate mineral material of step b) to the aqueous medium for scavenging the heavy metal contaminants and
d) Removing the functionalized particulate mineral material from the aqueous medium after step c).

Preferred embodiments of the inventive process are defined herein in the dependent claims.

According to one embodiment of the present invention the heavy metals in the heavy metal contaminants undergo a reduction reaction during step c)
According to one embodiment of the present invention the molar ratio of reducing agent to heavy metal contaminants in step c) is from 1:0.8 to 1:5000, preferably from 1:1 to 1:3000, more preferably from 1:2 to 1:1000, even more preferably from 1:3 to 1:500 and most preferably from 1:5 to 1:50.

According to one embodiment of the present invention the pH-value of the aqueous medium has been adjusted prior to the addition of the functionalized particulate mineral material to a value of 4 to 10, preferably 5 to 9 and most preferably 6 to 8.

According to one embodiment of the present invention the functionalization of the particulate mineral material of step b) is performed by the addition of Fe(II) salts, Mn(II) salts, Co(II) salts or mixtures thereof and/or
by the addition of aluminum salts, magnesium salts, tin salts, silver salts, iron salts, copper salts and/or mixture thereof and reducing the aluminum salt, magnesium salt, tin salt, silver salt, iron salt, copper salts and/or mixture thereof present on the surface of the particulate mineral material with an electron donor agent.

A third aspect described herein but not forming part of the invention is a functionalized particulate mineral material comprising at least one reducing agent which covers at least partially the surface of the particulate mineral material, wherein the particulate mineral material is selected from the group consisting of hydromagnesite, calcium carbonate containing particulate material, bentonite, brucite, magnesite, dolomite and mixtures thereof, and wherein the reducing agent is selected from the group consisting of Fe(II) salts, Mn(II) salts, Co(II) salts, elemental Mg, elemental Ag, elemental Sn, elemental Al, elemental Cu, elemental Fe and mixtures thereof. The inventors surprisingly found that reducing agents selected from the group consisting of Fe(II) salts, Mn(II) salts, Co(II) salts, elemental Mg, elemental Ag, elemental Sn, elemental Al, elemental Cu, elemental Fe and mixtures thereof are especially suitable for functionalizing the particulate mineral material so that a very efficient removal of heavy metal contaminants from an aqueous medium can be achieved. Additionally, the reducing agent reduces the heavy metal contaminants prior to or during adsorption from a higher oxidation state to a lower oxidation state.

The actual immobilization, i.e. the reaction of the at least one reducing agent with the particulate mineral material can be achieved by treating the particulate mineral with a solution of the at least one reducing agent. However, if the reducing agent is elemental Cu, elemental Fe, elemental Mg, elemental Ag, elemental Sn, elemental Al or mixtures thereof the process for preparing the functionalized particulate mineral material comprises the steps of
i) Providing a particulate mineral material selected from the group consisting of hydromagnesite, calcium carbonate containing particulate material, bentonite, brucite, magnesite, dolomite and mixtures thereof;
ii) Providing a magnesium salt, a silver salt, a tin salt, an aluminum salt, an iron salt, copper salt and/or mixtures thereof;
iii) Contacting the at least one particulate mineral material of step (i), the at least one magnesium salt, a silver salt, a tin salt, an aluminum salt, an iron salt, a copper salt and/or mixtures thereof of step (ii), and optionally water, in one or several steps to form a mixture;
iv) Providing an electron donor agent;
v) Contacting the mixture of step iii) with the electron donor agent of step iv).

Another aspect of the present invention refers to a scavenging complex comprising at least one cationic heavy metal ion and at least one functionalized particulate mineral material obtained by the process as defined above.

It should be understood that for the purposes of the present invention, the following terms have the following meanings:
The term "mineral material" in the meaning of the present invention refers to naturally occurring or synthetically produced substances that are solid under standard ambient temperature and pressure (SATP), i.e. at a temperature of 25°C and an absolute pressure of 100 kPa. The naturally occurring substances are inorganic and have a crystal structure or are amorphous.

The term "particulate" in the meaning of the present document refers to materials composed of a plurality of particles. Said plurality of particles may be defined, for example, by its particle size distribution (*d*₉₈, *d*₅₀ etc.).

A "solution" as referred to herein is understood to be a single phase mixture of a specific solvent and a specific solute, for example a single phase mixture of an active ingredient and water. The term "dissolved" as used herein thus refers to the physical state of a solute in a solution.

A "suspension" or "slurry" in the meaning of the present invention comprises non-dissolved solids in an aqueous medium, and optionally further additives, and usually contains large amounts of solids and, thus, is more viscous and can be of higher density than the aqueous medium supporting the suspension.

A "dry" material (e.g., dry calcium carbonate) may be defined by its total moisture content which, unless specified otherwise, is less than or equal to 1.0 wt.%, more preferably less than or equal to 0.5 wt.%, even more preferably less than or equal to 0.2 wt.%, and most preferably between 0.03 and 0.07 wt.%, based on the total weight of the dried material.

Unless specified otherwise, the term "drying" refers to a process according to which water is removed from a material to be dried such that a constant weight of the obtained "dried" material at 120 °C is reached, wherein the mass (sample size 5 g) does not change more than 1 mg over a period of 30 s.

The term "ground natural calcium carbonate" (GNCC) or "ground calcium carbonate" (GCC) as used herein refers to a particulate material obtained from natural calcium carbonate-containing minerals (e.g. chalk, limestone, marble or dolomite) which has been processed in a wet and/or dry comminution step, such as crushing and/or grinding, and optionally has been subjected to further steps such as screening and/or fractionation, for example, by a cyclone or a classifier.

A "precipitated calcium carbonate" (PCC) in the meaning of the present invention is a synthesized material, obtained by precipitation following a reaction of carbon dioxide and calcium hydroxide (hydrated lime) in an aqueous environment. Alternatively, precipitated calcium carbonate can also be obtained by reacting calcium- and carbonate salts, for example calcium chloride and sodium carbonate, in an aqueous environment. PCC may have a vateritic, calcitic or aragonitic crystalline form. PCCs are described, for example, in EP 2 447 213 A1, EP 2 524 898 A1, EP 2 371 766 A1, EP 2 840 065 A1, or WO 2013/142473 A1.

A "surface-reacted calcium carbonate" (SRCC) according to the present invention is a reaction product of ground calcium carbonate (GNCC)/(GCC) or precipitated calcium carbonate (PCC) treated with carbon dioxide and one or more H₃O⁺ ion donors, wherein the carbon dioxide is formed in situ by the H₃O⁺ ion donors treatment and/or is supplied from an external source. A H₃O⁺ ion donor in the context of the present invention is a Brønsted acid and/or an acid salt. Further details are provided hereinbelow. Surface-reacted calcium carbonate is a material and a term well-known in the art, which has been described in several earlier patent applications, such as WO 00/39222, US 2004/0020410, or WO 2010/037753.

The "particle size" of surface-reacted calcium carbonate herein is described as volume-based particle size distribution *d*ₓ(vol). Therein, the value *d*ₓ(vol) represents the diameter relative to which x % by volume of the particles have diameters less than *d*ₓ(vol). This means that, for example, the *d*₂₀(vol) value is the particle size at which 20 vol.% of all particles are smaller than that particle size. The *d*₅₀(vol) value is thus the volume median particle size, i.e. 50 vol.% of all particles are smaller than that particle size and the *d*₉₈(vol) value, referred to as volume-based top cut, is the particle size at which 98 vol.% of all particles are smaller than that particle size. The volume-based median particle size *d*₅₀(vol) and top cut *d*₉₈(vol) are evaluated using a Malvern Mastersizer 3000 Laser Diffraction System (Malvern Instruments Plc., Great Britain). The raw data obtained by the measurement is analyzed using the Mie theory, with a particle refractive index of 1.57 and an absorption index of 0.005//using the Fraunhofer theory. The methods and instruments are known to the skilled person and are commonly used to determine particle size distributions.

The "particle size" of particulate materials other than surface-reacted calcium carbonate (e.g., GNCC or PCC) herein is described by its distribution of particle sizes *d*ₓ(wt). Therein, the value *d*ₓ(wt) represents the diameter relative to which x *%* by weight of the particles have diameters less than *d*ₓ(wt). This means that, for example, the *d*₂₀(wt) value is the particle size at which 20 wt.% of all particles are smaller than that particle size. The *d*₅₀(wt) value is thus the weight median particle size, i.e. 50 wt.% of all particles are smaller than that particle size and the *d*₉₈(wt) value, referred to as weight-based top cut, is the particle size at which 98 wt.% of all particles are smaller than that particle size. The weight-based median particle size *d*₅₀(wt) and top cut *d*₉₈(wt) are measured by the sedimentation method, which is an analysis of sedimentation behaviour in a gravimetric field. The measurement is made with a Sedigraph^{™} 5120 of Micromeritics Instrument Corporation, USA. The method and the instrument are known to the skilled person and are commonly used to determine particle size distributions. The measurement is carried out in an aqueous solution of 0.1 wt.% Na₄P₂O₇. The samples are dispersed using a high speed stirrer and sonication.

For the purpose of the present invention, pH shall be measured according to the measurement method defined in the examples section herein below.

Throughout the present document, the term "specific surface area" (in m²/g), which is used to define functionalized calcium carbonate or other materials, refers to the specific surface area as determined by using the BET method (using nitrogen as adsorbing gas). Throughout the present document, the specific surface area (in m²/g) is determined using the BET method (using nitrogen as adsorbing gas), which is well known to the skilled man (ISO 9277:2010). The total surface area (in m²) of the filler material is then obtained by multiplication of the specific surface area and the mass (in g) of the corresponding sample.

A "reducing agent" in the meaning of the present invention is an agent which is able to reduce heavy metal contaminants. A "reduction reaction" in the meaning of the present invention refers to a chemical reaction wherein the oxidation state of a compound, for example of the heavy metal compound is changed from higher oxidation states to lower oxidation states since often the lower oxidation states are less toxic than the higher oxidation states and enhance the scavenging of the heavy metal contaminants on the minerals. For example, the reduction reaction is a chemical reaction wherein Cr(VI) is reduced to Cr(III). Reduction does not infer any variation of the concentration of the considered heavy metal.

An "electron donor agent" in the meaning of the present invention is a chemical agent that donates electrons to magnesium salts, silver salts, tin salts, aluminium salts, iron salts and copper salts and/or mixtures thereof and is able to reduce these salts to elemental Mg, elemental Ag, elemental Sn, elemental Al, elemental Fe and elemental Cu.

A "magnesium salt", "silver salt", "tin salt", "aluminium salt", "iron salt" or "copper salt" in the meaning of the present invention is a salt comprising magnesium cations, silver cations, tin cations, aluminium cations, iron cations or copper cations.

"Scavenging" of heavy metals in the meaning of the present invention refers to the incorporation of the heavy metal contaminants present in the aqueous phase into a solid phase, namely the functionalized particulate mineral material. The term scavenging does not imply any underlying mechanism and covers any mechanism selected from "absorption" "adsorption" "ion-exchange" and "precipitation" effects. These mechanisms are known to the skilled person.

A "scavenging complex" in the meaning of the present invention are particles comprising the functionalized particulate mineral material according to the present invention and heavy metal contaminants scavenged on these particles.

The terms "removal" or "removing" of heavy metal contaminants or "removal" of the scavenging complex or "removal" of the functionalized particulate mineral material after scavenging the heavy metal contaminants refers to the process of separating the heavy metal-containing solids (the scavenging complex) from the aqueous phase of the system, thereby separating the heavy metals in the solids completely or at least partially from the system.

Where an indefinite or definite article is used when referring to a singular noun, e.g., "a", "an" or "the", this includes a plural of that noun unless anything else is specifically stated.

Where the term "comprising" is used in the present description and claims, it does not exclude other elements. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined hereinabove.

Terms like "obtainable" or "definable" and "obtained" or "defined" are used interchangeably. This, e.g., means that, unless the context clearly dictates otherwise, the term "obtained" does not mean to indicate that, e.g., an embodiment must be obtained by, e.g., the sequence of steps following the term "obtained" though such a limited understanding is always included by the terms "obtained" or "defined" as a preferred embodiment.

When in the following preferred embodiments of the inventive use will be discussed in more detail, it is to be understood that these details and embodiments also apply to the inventive processes and vice versa. The same applies to the preferred embodiments described for the inventive functionalized particulate mineral material and the scavenging complex. It is to be understood that these details and embodiments also apply to the inventive use and/or processes and vice versa.

According to the inventive use and the process for lowering the amount of heavy metal contaminants according to the present invention, a particulate mineral material has to be functionalized with one or more reducing agents. The particulate mineral material to be used according to the present invention has to be selected from the group consisting of hydromagnesite, calcium carbonate containing particulate material, bentonite, brucite, magnesite, dolomite and mixtures thereof.

Hydromagnesite or basic magnesium carbonate, which is the standard industrial name for hydromagnesite, is a naturally occurring mineral, which is found in magnesium rich minerals such as serpentine and altered magnesium rich igneous rocks, but also as an alteration product of brucite in periclase marbles. Hydromagnesite is described as having the following formula Mg₅(CO₃)₄(OH)₂ · 4H₂O. It should be appreciated that hydromagnesite is a very specific mineral form of magnesium carbonate and occurs naturally as small needle-like crystals or crusts of acicular or bladed crystals. In addition thereto, it should be noted that hydromagnesite is a distinct and unique form of magnesium carbonate and is chemically, physically and structurally different from other forms of magnesium carbonate. Hydromagnesite can readily be distinguished from other magnesium carbonates by x-ray diffraction analysis, thermogravimetric analysis or elemental analysis. Besides the natural hydromagnesite, synthetic hydromagnesites (or precipitated magnesium carbonates) can be prepared. For instance, US 1,361,324, US 935,418, GB 548,197 and GB 544,907 generally describe the formation of aqueous solutions of magnesium bicarbonate (typically described as "Mg(HCO₃)₂"), which is then transformed by the action of a base, e.g., magnesium hydroxide, to form hydromagnesite.

Calcium carbonate containing materials according to the present invention include ground calcium carbonate (GCC), preferably marble, limestone, dolomite and/or chalk, synthetic precipitated calcium carbonate (PCC) preferably vaterite, calcite and/or aragonite, and surface-reacted calcium carbonate (SRCC) and mixtures of the foregoing materials. According to the present invention GCC is especially preferred.

Natural or ground calcium carbonate (GCC) is understood to be manufactured from a naturally occurring form of calcium carbonate, mined from sedimentary rocks such as limestone or chalk, or from metamorphic marble rocks, eggshells or seashells. Calcium carbonate is known to exist as three types of crystal polymorphs: calcite, aragonite and vaterite. Calcite, the most common crystal polymorph, is considered to be the most stable crystal form of calcium carbonate. Less common is aragonite, which has a discrete or clustered needle orthorhombic crystal structure. Vaterite is the rarest calcium carbonate polymorph and is generally unstable. Ground calcium carbonate is almost exclusively of the calcitic polymorph, which is said to be trigonal-rhombohedral and represents the most stable form of the calcium carbonate polymorphs. The term "source" of the calcium carbonate in the meaning of the present application refers to the naturally occurring mineral material from which the calcium carbonate is obtained. The source of the calcium carbonate may comprise further naturally occurring components such as magnesium carbonate, alumino silicate etc.

In general, the grinding of natural ground calcium carbonate may be a dry or wet grinding step and may be carried out with any conventional grinding device, for example, under conditions such that comminution predominantly results from impacts with a secondary body, i.e. in one or more of: a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled man. In case the calcium carbonate comprising mineral material comprises a wet ground calcium carbonate comprising mineral material, the grinding step may be performed under conditions such that autogenous grinding takes place and/or by horizontal ball milling, and/or other such processes known to the skilled man. The wet processed ground calcium carbonate comprising mineral material thus obtained may be washed and dewatered by well-known processes, e.g. by flocculation, filtration or forced evaporation prior to drying. The subsequent step of drying (if necessary) may be carried out in a single step such as spray drying, or in at least two steps. It is also common that such a mineral material undergoes a beneficiation step (such as a flotation, bleaching or magnetic separation step) to remove impurities.

According to one embodiment of the present invention the source of natural or ground calcium carbonate (GCC) is selected from marble, chalk, limestone, or mixtures thereof. Preferably, the source of ground calcium carbonate is marble, and more preferably dolomitic marble and/or magnesitic marble. According to one embodiment of the present invention the GCC is obtained by dry grinding. According to another embodiment of the present invention the GCC is obtained by wet grinding and subsequent drying.

"Dolomite" in the meaning of the present invention is a calcium carbonate comprising mineral, namely a carbonic calcium-magnesium-mineral, having the chemical composition of CaMg(CO₃)₂ ("CaCO₃ · MgCO₃"). A dolomite mineral may contain at least 30.0 wt.-% MgCO₃, based on the total weight of dolomite, preferably more than 35.0 wt.-%, and more preferably more than 40.0 wt.-% MgCO₃.

"Precipitated calcium carbonate" (PCC) in the meaning of the present invention is a synthesized material, generally obtained by precipitation following reaction of carbon dioxide and lime in an aqueous environment or by precipitation of a calcium and carbonate ion source in water or by precipitation by combining calcium and carbonate ions, for example CaCl₂ and Na₂CO₃, out of solution. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained PCC slurry can be mechanically dewatered and dried.

According to one embodiment of the present invention, the precipitated calcium carbonate is precipitated calcium carbonate, preferably comprising aragonitic, vateritic or calcitic mineralogical crystal forms or mixtures thereof.

"Surface-reacted calcium carbonate" (SRCC) in the meaning of the present invention is a reaction product of natural ground or precipitated calcium carbonate with carbon dioxide and one or more H₃O⁺ ion donors in an aqueous medium, wherein the carbon dioxide is formed in situ by the H₃O⁺ ion donor treatment and/or is supplied from an external source and mixtures thereof. The natural or precipitated calcium carbonate represents the starting material for preparing the surface-reacted calcium carbonate (SRCC). More precisely, the reaction of natural or synthetic calcium carbonate with an acid knowingly results in the formation of an insoluble, at least partially crystalline salt of an anion of the acid on the surface of the natural or synthetic calcium carbonate. Depending on the employed acid, insoluble calcium salts including anions such as sulphate, phosphate, citrate, or oxalate can be formed. In other words, the chemical nature of the natural or synthetic calcium carbonate source material is changed by the reaction with the at least one acid and the carbon dioxide. The presence of the formed insoluble calcium salts can be detected by methods known to the skilled person, for example, by X-ray diffraction measurements (XRD). Therefore, the surface-reacted calcium carbonate can be clearly distinguished from conventional calcium carbonate such as natural or synthetic calcium carbonate based on the material composition. Furthermore, due to the reaction of the natural or synthetic calcium carbonate with the at least one acid, the shape and surface structure of the natural or synthetic calcium carbonate are significantly changed.

Further details about the preparation of the surface-reacted natural calcium carbonate are disclosed in WO 00/39222 A1, WO 2004/083316 A1, WO 2005/121257 A2, WO 2009/074492 A1, EP 2 264 108 A1, EP 2 264 109 A1 and US 2004/0020410 A1.

"Bentonite" in the meaning of the present invention is a phyllosilicate and preferably selected from sodium bentonite, calcium bentonite, potassium bentonite and mixtures thereof. It is appreciated that the bentonite is a natural material and thus its precise composition, the number of its constituents and the amount of the single constituents may vary in a broad range usually depending on the source of origin. For example, the bentonite usually comprises, preferably consists of, various clay minerals such as in particular montmorillonite as the main component, but also quartz, kaolinite, mica, feldspar, pyrite, calcite, cristobalite and mixtures thereof as concomitant minerals. These minerals may be present in variable amounts, as well as other components, depending on the site of origin.

"Brucite" in the meaning of the present invention is the mineral form of magnesium hydroxide, with the chemical formula Mg(OH)₂. It is a common alteration product of periclase in marble; a low-temperature hydrothermal vein mineral in metamorphosed limestones and chlorite schists; and formed during serpentinization of dunites. According to a preferred embodiment the brucite is a natural material and, therefore, may be association with serpentine, calcite, aragonite, dolomite, magnesite, hydromagnesite, artinite, talc and chrysotile.

"Magnesite" in the meaning of the present invention is a mineral with the chemical formula MgCO₃ (magnesium carbonate).

According to one embodiment of the present invention the particulate mineral material is selected from hydromagnesite, calcium carbonate containing particulate material or mixtures thereof, preferably is a calcium carbonate containing particulate material, more preferably is selected from SRCC, GCC, PCC or mixtures thereof and most preferably is GCC.

According to a preferred embodiment the particulate mineral material prior to functionalization with said one or more reducing agents has a median particle diameter *d*₅₀ value of between 0.01 µm and 500 µm, preferably between 0.1 µm and 250 µm, more preferably between 0.5 µm and 150 µm and most preferably between 1 µm and 100 µm and/or the particulate mineral material prior to functionalization with said one or more reducing agents has a specific surface area of from 0.5 to 250 m²/g, more preferably from 1 to 200 m²/g, even more preferably from 4 to 150 m²/g and most preferably from 10 to 80 m²/g.

According to a preferred embodiment the particulate mineral material prior to functionalization with said one or more reducing agents has a weight median particle diameter *d*₅₀ value of between 0.01 µm and 500 µm, preferably between 0.1 µm and 250 µm, more preferably between 0.5 µm and 150 µm and most preferably between 1 µm and 100 µm in the case the particulate mineral material is selected from hydromagnesite, GCC, PCC, bentonite, brucite, magnesite, dolomite and mixtures thereof. According to a further embodiment of the present invention, said particulate mineral material has a top cut particle size *d*₉₈(wt.%) of from 0.03 to 1500 µm, preferably from 0.3 to 750 µm, more preferably from 1.5 to 450 µm, most preferably from 3 to 300 µm.

According to another embodiment the particulate mineral material prior to functionalization with said one or more reducing agents has a volume median particle diameter *d*₅₀ value of between 0.01 µm and 500 µm, preferably between 0.1 µm and 250 µm, more preferably between 0.5 µm and 150 µm and most preferably between 1 µm and 100 µm in the case the particulate mineral material is SRCC. According to a further embodiment of the present invention, said particulate mineral material has a top cut particle size *d*₉₈(vol.%) of from 0.02 to 1000 µm, preferably from 0.2 to 500 µm, more preferably from 1 to 300 µm, most preferably from 2 to 200 µm.

Additionally or alternatively, the particulate mineral material prior to functionalization with said one or more reducing agents has a specific surface area of from 0.5 to 250 m²/g, more preferably from 1 to 200 m²/g, even more preferably from 4 to 150 m²/g and most preferably from 10 to 80 m²/g, as measured using nitrogen and the BET method according to ISO 9277:2010.

The specific pore volume is measured using a mercury intrusion porosimetry measurement using a Micromeritics Autopore V 9620 mercury porosimeter having a maximum applied pressure of mercury 414 MPa (60 000 psi), equivalent to a Laplace throat diameter of 0.004 µm (~ nm). The equilibration time used at each pressure step is 20 seconds. The sample material is sealed in a 5 cm3 chamber powder penetrometer for analysis. The data are corrected for mercury compression, penetrometer expansion and sample material compression using the software Pore-Comp (Gane, P.A.C., Kettle, J.P., Matthews, G.P. and Ridgway, C.J., "Void Space Structure of Compressible Polymer Spheres and Consolidated Calcium Carbonate Paper-Coating Formulations", Industrial and Engineering Chemistry Research, 35(5), 1996, p. 1753-1764.).

The total pore volume seen in the cumulative intrusion data can be separated into two regions with the intrusion data from 214 µm down to about 1 - 4 µm showing the coarse packing of the sample between any agglomerate structures contributing strongly. Below these diameters lies the fine interparticle packing of the particles themselves. If they also have intraparticle pores, then this region appears bi modal, and by taking the specific pore volume intruded by mercury into pores finer than the modal turning point, i.e. finer than the bi-modal point of inflection, the specific intraparticle pore volume is defined. The sum of these three regions gives the total overall pore volume of the powder, but depends strongly on the original sample compaction/settling of the powder at the coarse pore end of the distribution.

By taking the first derivative of the cumulative intrusion curve the pore size distributions based on equivalent Laplace diameter, inevitably including pore-shielding, are revealed. The differential curves clearly show the coarse agglomerate pore structure region, the interparticle pore region and the intraparticle pore region, if present. Knowing the intraparticle pore diameter range it is possible to subtract the remainder interparticle and interagglomerate pore volume from the total pore volume to deliver the desired pore volume of the internal pores alone in terms of the pore volume per unit mass (specific pore volume). The same principle of subtraction, of course, applies for isolating any of the other pore size regions of interest.

Preferably, the surface-reacted calcium carbonate has an intra-particle intruded specific pore volume in the range from 0.1 to 2.15 cm³/g, more preferably from 0.2 to 1.95 cm³/g, especially preferably from 0.4 to 1.75 cm³/g and most preferably from 0.6 to 1.65 cm³/g, calculated from mercury porosimetry measurement.

The intra-particle pore size of the surface-reacted calcium carbonate preferably is in a range of from 0.004 to 1.2 µm, more preferably in a range of from 0.004 to 0.9 µm, especially preferably from 0.004 to 0.8 µm and most preferably of 0.004 to 0.7 µm, e.g. 0.004 to 0.6 µm determined by mercury porosimetry measurement.

The aforementioned particulate mineral materials according to the present invention are functionalized with one or more reducing agents. Said functionalization, i.e. immobilization of the one or more reducing agents on the particulate mineral material can be achieved by different preparation methods.

In case the reducing agent is selected from the group consisting of Fe(II) salts, Mn(II) salts, Co(II) salts, and mixtures thereof it is especially preferred to dissolve the one or more reducing agents in a suitable solvent and to bring the resulting solution into contact with the particulate mineral material. Alternatively, the particulate mineral material is mixed with the Fe(II) salts, Mn(II) salts, Co(II) salts, or mixtures thereof and afterwards dry-blended. Dry-blending may, for example, be performed during a high speed mixing or grinding step and may be carried out with any conventional high speed mixing or grinding device, for example, under conditions such that comminution predominantly results from impacts with a secondary body, i.e. in one or more of: a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled man. Alternatively, the grinding step may be performed under conditions such that autogenous grinding takes place and/or by horizontal milling, and/or other such processes known to the skilled man. High speed mixers can be in a horizontal or vertical position, wherein mixing can be performed between 400-3000 rpm, e.g. a vertical speed mixer Type M from MTI - Mischtechnik International GmbH.

In case the reducing agent is selected from the group consisting of elemental A1, elemental Sn, elemental Ag, elemental Mg, elemental Cu, elemental Fe and mixtures thereof the functionalizing is prepared by contacting the particulate mineral material with an aluminum salt, magnesium salt, silver salt, tin salt, iron salt, copper salt and/or mixture thereof and reducing the salts on the surface of the particulate mineral material with an electron donor agent to obtain elemental A1, elemental Sn, elemental Ag, elemental Mg, elemental Cu, elemental Fe and/or mixtures thereof on the surface of the particulate mineral material. More precisely, according to one embodiment of the present invention a process for preparing a functionalized particulate mineral material is disclosed, wherein the reducing agent is elemental A1, elemental Sn, elemental Ag, elemental Mg, elemental Cu, elemental Fe and/or mixtures thereof comprising the steps of i) Providing a particulate mineral material selected from the group consisting of hydromagnesite, calcium carbonate containing particulate material, bentonite, brucite, magnesite, dolomite and mixtures thereof; ii) Providing an aluminum salt, magnesium salt, silver salt, tin salt, iron salt ,copper salt and/or mixtures thereof; iii) Contacting the at least one particulate mineral material of step (i), the at least one aluminum salt, magnesium salt, silver salt, tin salt, iron salt, copper salt and/or mixtures thereof of step (ii), and optionally water, in one or several steps to form a mixture; iv) Providing an electron donor agent; and v) Contacting the mixture of step iii) with the electron donor agent of step iv).

A "magnesium salt", "silver salt", "tin salt", "aluminium salt", "iron salt" or "copper salt" in the meaning of the present invention is a salt comprising magnesium cations, silver cations, tin cations, aluminium cations, iron cations or copper cations. Such salts are known to the skilled person and are commercially available.

According to a preferred embodiment of the present invention the "magnesium salt", "silver salt", "tin salt", "aluminium salt", "iron salt" or "copper salt" is water soluble and, therefore, forms a solution when dissolved in water. The "absolute water solubility" of a compound is to be understood as the maximum concentration of a compound in water where one can observe a single phase mixture at 20°C under equilibrium conditions. The absolute water solubility is given in g compound per 100 g water. According to a preferred embodiment the copper salts or iron salt has absolute water solubilities of above 0.1 g per 100 g water, preferably of above 1 g per 100 g water and most preferably of above 5 g per 100 g water.

In contacting step iii) it is especially preferred to dissolve the one or more magnesium salts, silver salts, tin salts, aluminium salts, iron salts, copper salts and/or mixture thereof in a suitable solvent and to bring the resulting solution into contact with the particulate mineral material. Alternatively, the particulate mineral material is mixed with the magnesium salts, silver salts, tin salts, aluminium salts, iron salts, copper salts and/or mixture thereof and afterwards dry-blended. Dry-blending may, for example, be performed during a high speed mixing or grinding step and may be carried out with any conventional high speed mixing or grinding device, for example, under conditions such that comminution predominantly results from impacts with a secondary body, i.e. in one or more of: a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled man. Alternatively, the grinding step may be performed under conditions such that autogenous grinding takes place and/or by horizontal milling, and/or other such processes known to the skilled man. High speed mixers can be in a horizontal or vertical position, wherein mixing can be performed between 400-3000 rpm, e.g. a vertical speed mixer Type M from MTI - Mischtechnik International GmbH. If step iii) is a dry-blending step then the mixture is diluted in water to obtain a slurry. Preferably, the slurry has a total weight concentration of 5 to 90 wt.-% based on the total weight of the slurry.

Afterwards, an electron donor agent is provided and the mixture in form of a slurry or dry powder of step iii) is contacted with the electron donor agent. An "electron donor agent" in the meaning of the present invention is a chemical agent that donates electrons to aluminum salts, tin salts, magnesium salts, silver salts, iron salts, copper salts and/or mixture thereof is able to reduce these salts to elemental A1, elemental Sn, elemental Mg, elemental Ag, elemental Fe and elemental Cu. Possible electron donor agents are NaBH₄, LiBH₄, hydrazine or molecular hydrogen. Such electron donor agents are known to the skilled person and are commercially available. According to a preferred embodiment the electron donator agent is NaBH₄. The electron donor agent is added in an amount such that a ratio of aluminum salt, tin salt, magnesium salt, silver salt, iron salt, copper salt and/or mixture thereof : electron donor agent is 1:0.1 to 1:15, preferably 1:1 to 1:10 and most preferably is 1:5.

The slurry can be washed with water or a water/ethanol mixture one or several times. Afterwards, the functionalized particulate mineral material is used as slurry or is further dried. Preferably the drying step takes place in an oxygen free atmosphere, for example under N₂ or in vacuum.

According to the present invention, the functionalized particulate mineral material comprises the one or more reducing agent preferably in an amount of 1 to 50 wt.-%, based on the total dry weight of the particulate mineral material, preferably 5 to 30 wt.-% and more preferably 10 to 20 wt.-%.

The reducing agent according to the present invention in any case is able to reduce heavy metal contaminants. This means that the reducing agent which is immobilized on the surface of the mineral material is able to reduce the oxidation state of the cationic heavy metal ion is from higher oxidation states to lower oxidation states. This is advantageous since often the lower oxidation states are less toxic than the higher oxidation states and enhance the scavenging of the species on the minerals. Furthermore, the inventors surprisingly found that such functionalized particulate mineral materials can scavenge the reduced heavy metal contaminants. The thus obtained scavenging complexes comprising the functionalized particulate mineral material and the heavy metal contaminants either in original or reduced oxidation state can be removed from the aqueous medium by techniques well known to the skilled person. These techniques include sedimentation, filtration, flotation, sieving and centrifugation. Alternatively the functionalized particulate mineral material comprising the reducing agent may be present in a fixed-bed installation and the aqueous medium comprising the heavy metal contaminants flows through said bed. The obtained scavenging complex is present in said bed after the aqueous medium has flown through said bed. The used technique depends on the nature of the obtained scavenging complex and the nature of the aqueous medium. The skilled person knows how to choose the right removing technique.

As already set out above the reducing agent has to be selected from the group consisting of Fe(II) salts, Mn(II) salts, Co(II) salts, elemental Al, elemental Mg, elemental Sn, elemental Ag, elemental Cu, elemental Fe and mixtures thereof.

Salts of Fe(II), Mn(II) and Co(II) are salts that comprise iron, manganese and cobalt in the oxidation state II. In other words salts of Fe(II), Mn(II) and Co(II) are salts that comprise Fe²⁺ ions, Mn²⁺ ions and Co²⁺ ions. The salts can be any salts that are technically possible and are known to the skilled person.

According to a preferred embodiment these salts are water soluble and, therefore, form a solution when dissolved in water. The "absolute water solubility" of a compound is to be understood as the maximum concentration of a compound in water where one can observe a single phase mixture at 20°C under equilibrium conditions. The absolute water solubility is given in g compound per 100 g water. According to a preferred embodiment the Fe(II) salts, Mn(II) salts and Co(II) salts have absolute water solubilities of above 0.1 g per 100 g water, preferably of above 1 g per 100 g water and most preferably of above 5 g per 100 g water.

According to a preferred embodiment the reducing agent is selected from the group consisting of Fe(II) salts, Mn(II) salts, Co(II) salts and mixtures thereof, preferably is an Fe(II) salt and preferably the anion is selected from SO₄²⁻, C₂O₄²⁻, (NO₃)⁻, Cl⁻, Br⁻, OH⁻ or mixtures thereof, more preferably the anion is SO₄²⁻, and most preferably the salt is FeSO₄.

Such salts are, for example, FeSO₄, FeC₂O₄, Fe(NO₃)₂, FeCl₂, FeBr₂, FeOH₂, MnSO₄, MnC₂O₄, Mn(NO₃)₂, MnCl₂, MnBr₂, MnOH₂, CoSO₄, CoC₂O₄, Co(NO₃)₂, CoCl₂, CoBr₂, CoOH₂ and the corresponding salt comprising crystal water, for example, FeSO₄ · 7H₂O, FeC₂O₄ · 2 H₂O, Mn(NO₃)₂ · 4 H₂O, MnCl₂ · 4 H₂O, MnSO₄ · H₂O and CoSO₄ · 7H₂O.

According to a preferred embodiment the reducing agent is selected from the group consisting of Fe(II) salts, Mn(II) salts, Co(II) salts and mixtures thereof the anion is SO₄²⁻. Such salts are, for example, FeSO₄, MnSO₄ and CoSO₄, and the corresponding salts comprising crystal water, for example, FeSO₄ · 7H₂O, MnSO₄ · H₂O and CoSO₄ · 7H₂O.

According to a preferred embodiment the reducing agent is FeSO₄, and the corresponding salts comprising crystal water, for example, FeSO₄ · 7H₂O.

Elemental Al, elemental Sn, elemental Ag, elemental Mg, elemental Cu and elemental Fe are the elements aluminium, tin, silver, magnesium, copper and iron in the oxidation state zero and, therefore, these compounds are no salts but metal particles. The elemental metal particles may comprise traces of corresponding metal oxides. For example, the elemental iron may comprise traces of iron oxides. Traces means that the corresponding oxides are only present in very low amount, preferably in amounts below 1 wt.-% based on the total weight of said elemental metal.

According to one embodiment of the present invention at least one reducing agent is present on the surface of the functionalised particulate mineral material. For example, a mixture of the Fe(II) salts, Mn(II) salts and Co(II) salts is present on the surface. Alternatively, a mixture of elemental Al, elemental Sn, elemental Ag, elemental Mg, elemental Cu and elemental Fe is present on the surface of the functionalised particulate mineral material. According to a preferred embodiment of the present invention only one reducing agent is present on the surface of the functionalised particulate mineral material.

The contacting of the functionalized particulate mineral material with the aqueous medium containing heavy metal contaminants according to the present invention can be carried out by adding a suitable amount of said functionalized particulate mineral. A suitable amount in this context is an amount which is sufficiently high in order to achieve the desired grade of reducing, scavenging and removal of said heavy metal contaminants. Such suitable amount obviously depends on the concentration of the metal in the aqueous medium as well as on the amount of aqueous medium to be treated. Generally speaking it is preferred to add 0.005 to 5 wt.-%, preferably 0.05 to 2 wt.-% of functionalized particulate mineral material to an aqueous medium comprising one or more heavy metal contaminants in an amount of 0.1 to 100 ppm. However, it is to be noted that also higher concentrations of heavy metal contaminants can be reduced, scavenged and removed with the functionalized particulate mineral material according to the present invention or the inventive process. In such case, higher amounts of functionalized mineral material may be applied.

The aqueous medium according to the present invention preferably is selected from sewage water, preferably industrial sewage water, waste water, preferably waste water from the paper industry, waste water from the colour-, paints-, or coatings industry, waste water from breweries, waste water from the leather industry, agricultural waste water or slaughterhouse waste water, from sludge, preferably sewage sludge, harbour sludge, river sludge, coastal sludge, digested sludge, mining sludge, municipal sludge, civil engineering sludge, sludge from oil drilling or the effluents of the aforementioned dewatered sludges. However, it is to be understood that according to the present invention also any of the aqueous medium containing one or more heavy metal contaminants can be effectively treated with the inventive process and inventive functionalized particulate mineral material.

"Heavy metal contaminants" according to the present invention are contaminants of heavy metal compounds. Heavy metals are metals with relatively high densities, atomic weights, or atomic numbers. Heavy metals are known to the skilled person. According to a preferred embodiment of the present invention the heavy metals from the heavy metal contaminants are selected from the group consisting of Mn, Cr, Hg, As and Se.

According to one embodiment of the present invention, the heavy metal contaminates are in the form of cationic heavy metal ions and/or in the form of an anionic compound comprising said heavy metal. A "cationic heavy metal ion" in the meaning of the present invention is a cationic ion (having a positive charge) of said heavy metal. An "anionic compound comprising said heavy metal" in the meaning of the present invention is an anionic compound (having a negative charge) comprising said heavy metal. In the cationic heavy metal ions as well as in the anionic compounds comprising said heavy metals said heavy metals have positive oxidation numbers or oxidation states.

According to a preferred embodiment of the present invention, the heavy metal contaminant is in the form of an anionic compound comprising said heavy metal, wherein the heavy metal in the anionic compound is selected from the group consisting of Hg, Cr, As, Se, Mn and mixtures thereof, preferably is Hg(II), Cr(VI), As(V), Mn(VII), Se(VI) or mixtures thereof, even more preferably the anionic compound is CrO₄²⁻, Cr₂O₇²⁻, Cr₃O₁₀²⁻, Cr₄O₁₃²⁻, AsO₄³⁻, MnO₄²⁻, SeO₄²⁻ or mixtures thereof and/or protonated versions thereof and most preferably is CrO₄²⁻, AsO₄³⁻and/or protonated versions thereof. Such anionic heavy metal compounds are known to the skilled person.

According to a preferred embodiment of the present invention, the aqueous medium according to the present invention is preferably selected from sewage water, preferably industrial sewage water, waste water, preferably waste water from the paper industry, waste water from the colour-, paints-, or coatings industry, waste water from breweries, waste water from the leather industry, agricultural waste water or slaughterhouse waste water, from sludge, preferably sewage sludge, harbour sludge, river sludge, coastal sludge, digested sludge, mining sludge, municipal sludge, civil engineering sludge, sludge from oil drilling or the effluents of the aforementioned dewatered sludges and contains one or more heavy metal contaminants, wherein the heavy metal contaminant is in the form of an anionic compound comprising said heavy metal, wherein the heavy metal in the anionic compound is selected from the group consisting of Hg, Cr, As, Se, Mn and mixtures thereof, preferably is Hg (II), Cr(VI), As(V), Mn(VII), Se(VI) or mixtures thereof, even more preferably the anionic compound is CrO₄²⁻, Cr₂O₇²⁻, Cr₃O₁₀²⁻, Cr₄O₁₃²⁻, AsO₄³⁻, MnO₄²⁻, SeO₄²⁻ or mixtures thereof and/or protonated versions thereof and most preferably is CrO₄²⁻, AsO₄³⁻ and/or protonated versions thereof.

That treatment or contacting with the functionalized particulate mineral material may be carried out at any temperature. However, it is especially preferred to treat the aqueous medium at a temperature in the range of 5 to 80°C, preferably, 10 to 40°C, more preferably 15 to 30°C and most preferably at a temperature of 18 to 25°C. Furthermore, it is preferred according to the present invention to adjust the aqueous medium prior to treatment with the functionalized particulate mineral material to a pH-value of 4 to 10, preferably 5 to 9 and more preferably to 6 to 8.

The functionalized particulate mineral material, being excluded from the subject matter of the present invention can be in solid form, e.g. in the form of a powder, granules or can be in the form of a slurry prior to its use in the inventive process or for the inventive purpose. Preferably, the functionalized particular material is stored and/or used in dry form.

According to one embodiment of the present invention, the molar ratio of reducing agent to heavy metal contaminants is from 1:0.8 to 1:5000, preferably from 1:1 to 1:3000, more preferably from 1:2 to 1:1000, even more preferably from 1:3 to 1:500 and most preferably from 1:5 to 1:50.

The scope and interest of the invention will be better understood based on the following examples which are intended to illustrate certain embodiments of the present invention and are non-limitative.

### Experimental section

### 1. Measuring methods

In the following, measuring methods implemented in the examples are described. Reference is also made to the methods already described above.

Any pH value is measured at 25 °C using a Mettler-Toledo Seven Easy pH meter and a Mettler-Toledo InLab Expert Pro pH electrode. A three point calibration (according to the segment method) of the instrument is first made using commercially available buffer solutions having pH values of 4, 7 and 10 at 25 °C (from Aldrich). The reported pH values are the endpoint values detected by the instrument (signal differs by less than 0.1 mV from the average over the last 6 seconds).

The Cr-content or concentration was determined by using ICP-MS (Inductively Coupled Plasma - Mass Spectrometry). The samples were measured with a NexION 350D ICP-MS system from Perkin Elmer in KED mode (Kinetic Energy Discrimination). The calibration was conducted using standard reference material (Instrument Calibration Standard 2). The samples were diluted when necessary with HNO₃ 1% (e.g. 1 ml sample + 9 ml acidified H₂O). Standard additions were conducted as follows: 10 µl standard / 10 ml measuring solution.

Alternatively, the Cr-content or concentration was determined by using ICP-OES (Inductively Coupled Plasma - Atomic emission spectroscopy) according to EN ISO 11885:2009 using an Agilent 5100 VDV system. The used methods and instruments are known to the skilled person and are commonly used to determine the heavy metal concentrations.

The specific surface area (in m²/g) was determined by using the BET method (using nitrogen as adsorbing gas) in accordance with ISO 9277:2010. The total surface area (in m²) of the filler material was then obtained by multiplication of the specific surface area and the mass (in g) of the corresponding sample.

### 2. Particulate mineral materials

A surface-reacted calcium carbonate material (SRCC) was prepared as described in the following:
Surface reacted calcium carbonate (SRCC) was obtained by preparing 10 liters of an aqueous suspension of ground calcium carbonate in a mixing vessel by adjusting the solids content of a ground limestone calcium carbonate from Blaubeuren, Germany having a particle size distribution of 90% less than 2 µm, as determined by sedimentation, such that a solids content of 15 wt%, based on the total weight of the aqueous suspension, is obtained. In addition, concentrated phosphoric acid was diluted in water to prepare a 30 wt% phosphoric acid solution. Whilst mixing the slurry, 2.8 kg of the phosphoric acid solution was added to said suspension over a period of 10 minutes at a temperature of 70°C. Finally, after the addition of the phosphoric acid, the slurry was stirred for additional 5 minutes, before removing it from the vessel and drying. The specific surface area of the SRCC was determined to be 92 m²/g.

The GCC 1 used in the present invention is a ground calcium carbonate based on marble from Avenza, Italy which was subjected to wet grinding without dispersant and subsequently spray-dried, resulting in a material with a particle size of d₅₀ of 1.7 µm, a d₉₈ of 5 µm and a surface area of 3.5 m²/g.

The GCC 2 used in the present invention is a ground calcium carbonate based on marble from Avenza, Italy which was dry-milled to a particle size of d₅₀ of 1.7 µm, a d₉₈ of 6.5 µm and a surface area of 3.7 m²/g.

The GCC3 used in the present invention is a ground calcium carbonate based on limestone from Orgon, France which was wet-milled and subsequently spray-dried to attain a material with a particle size of d₅₀ of 0.53 µm, a d₉₈ of 0.78 µm and a surface area of 7.8 m²/g.

The PCC used in the present invention is an aragonitic PCC which has been received as filter cake and has been spray dried, with a particle size of d₅₀ of 0.88 µm and a surface area of 14.6 m²/g.

The PHM used in the present invention is a food grade hydromagnesite. with a particle size of d₅₀ of 21 µm, a d₉₈ of 64 µm and a surface area of 38 m²/g.

### 3. Manufacture of the functionalized mineral materials

Functionalized mineral materials 1 to 9 were prepared as described in the following:
5 g of SRCC/GCC/PCC/PHM was dried at 100°C overnight. FeCl₂ was used as scavenging agents for functionalizing the dried SRCC/GCC/PCC/PHM. The respective amount of reducing agent was dissolved in water. The corresponding solutions were added dropwise on the SRCC/GCC/PCC/PHM material (dry impregnation). After that, the obtained material was dried at 100°C under vacuum (50 mbar) for 3 hours. Finally, a manual de-agglomeration step was applied.

Functionalized mineral materials 10-14 were prepared as described in the following: 20 g of GCC and 2 g of reducing agent were introduced into a Retsch PM 100 planetary ball mill equipped with a 50 mL ZrO₂-coated grinding jar. For grinding, 10 g of 2 mm ZrO₂ grinding beads were added, along with 1 g of EtOH was added to prevent agglomeration during grinding. The samples were milled at 600 rpm for 10 min, the grinding beads removed and the resulting powders dried in an oven at 65°C.

The amounts of the respective reducing agent, the type of reducing agent as well as the amount of particulate mineral material and solvent is given in table 1 below.

**Table 1**

| No | Mineral | Amount Mineral [g] | Reducing agent | Weight Reducing Agent [wt.-%] | Amount Reducing. Agent [g] | Solvent | Amount Solvent [g] |
|---|---|---|---|---|---|---|---|
| 1 | SRCC | 5 | FeCl₂ | 15 | 0.75 | H₂O | 10 |
| 2 | GCC 1 | 10 | FeCl₂ | 15 | 0.75 | H₂O | 3.5 |
| 3 | PCC | 5 | FeCl₂ | 15 | 0.75 | H₂O | 4.5 |
| 4 | PHM | 5 | FeCl₂ | 15 | 0.75 | H₂O | 10 |
| 5 | SRCC | 5 | FeCl₂ | 15 | 0.75 | Ethanol | 17 |
| 6^{a} | SRCC | 10 | elemental Fe | 5 | 2.5 | H₂O | 250 |
| 7^{a} | SRCC | 10 | elemental Fe | 10 | 5 | H₂O | 250 |
| 8 ^{a} | SRCC | 5 | elemental Fe | 20 | 5 | H₂O | 250 |
| 9 ^{a} | GCC3 | 5 | elemental Cu | 25 | 3.15 | H₂O | 250 |
| 10^{b} | GCC1 | 20 | elemental Mg | 10 | 2 | EtOH | 1 |
| 11^{b} | GCC1 | 20 | elemental Mn | 10 | 2 | EtOH | 1 |
| 12^{b} | GCC1 | 20 | elemental Zr | 10 | 2 | EtOH | 1 |
| 13^{b} | GCC1 | 20 | elemental Ag | 10 | 2 | EtOH | 1 |
| 14^{b} | GCC1 | 20 | elemental Zn | 10 | 2 | EtOH | 1 |

| | | | | | | | |
|---|---|---|---|---|---|---|---|
| ^{a} Samples prepared by a wet impregnation procedure. ^{b}Samples prepared by a cogrinding procedure. | | | | | | | |

### 4. Reducing, Scavenging and Removal-Tests

In order to investigate the reducing, scavenging and removal capabilities and especially the efficiency of the inventive materials and processes for removing heavy metal ions, the functionalized particulate mineral materials described above were tested in relation to an aqueous medium containing chromium (VI) ions.

### Test Solution

A Cr-containing stock solution (1 ppm Cr as Cr₂O₄²⁻) was prepared by dilution of a commercial 1000 ppm standard (Sigma Aldrich, 68131-100ML-F) with Milli-Q filtered, deionized water.

### Treatment procedure (contacting and removal)

For each experiment, 200 g of this stock solution was transferred into a glass flask and 200 mg of the respective mineral material was added at room temperature. The solids were suspended by using magnetic stirring bars (500 to 800 rpm, 1 to 23 hours). The suspensions were left for settling (10 min), the turbid supernatant (100 mL) transferred into centrifugation tubes, centrifuged (4500 rpm, 4 min) and the now clear supernatant filtered through a syringe filter (Chromafil Xtra, RC-20/25 0.2µm). To these solutions (ca. 87 g), hydrochloric acid (1 mL, 37%, SigmaAldrich) was added to prevent the precipitation of any material before analysis.

Blank experiments (#1) were conducted and the resulting concentrations were taken as reference. Statements regarding the Cr reduction and removal are made with respect to the concentration of these reference samples. The Cr-content or concentration was determined as explained above by using ICP-OES. Furthermore, some of the particulate mineral materials and the reducing agents were tested without functionalization (#2, #3, #5, #7, #9).

The corresponding results of the reducing, scavenging and removal test are reported in Table 2.

**Table 2**

| # | Mineral material | No. | Weight (functionalized) mineral [ppm] | Weight reducing. Agent [ppm] | Final concentration Cr(VI) [mg/l] | Final total Cr concentration [mg/l] |
|---|---|---|---|---|---|---|
| #1 | Reference | - | | - | 0.91 | 1.1 |
| #2 | SRCC (n. func.) | - | 1000 | - | 0.91 | 1.1 |
| #3 | FeCl₂ | - | | 150 | 0.0* | 1.0 |
| #4 | SRCC/FeCl₂ | 1 | 1150 | - | 0.71 | 0.86 |
| #5 | GCC 1 (n. func.) | | 1000 | - | 0.93 | 1.1 |
| #6 | GCC 1/FeCl₂ | 2 | 1150 | - | 0.0* | 0.0 |
| #7 | PCC (n. func.) | | 1000 | - | 0.90 | 1.1 |
| #8 | PCC/FeCl₂ | 3 | 1150 | - | 0.78 | 0.89 |
| #9 | PHM (n. func.) | | 1000 | - | 0.91 | 1.1 |
| #10 | PHM/FeCl₂ | 4 | 1150 | | 0.43 | 0.50 |

| | | | | | | |
|---|---|---|---|---|---|---|
| * values of 0.0 lie below the detection limit of 0.002 mg/l | | | | | | |

Blank experiment (#11) was conducted and the resulting concentration was taken as reference. Statements regarding the Cr removal are made with respect to the concentration of these reference samples. The Cr-content or concentration was determined as explained above by using ICP-MS (Inductively Coupled Plasma - Mass Spectrometry). Furthermore, some of the particulate mineral materials were tested without functionalization (#12,#13).

The corresponding results of the reducing, scavenging and removal test are reported in Table 3.

**Table 3**

| # | Mineral material | No. | Weight (functionalized) mineral [ppm] | Weight reducing. Agent [ppm] | Final total concentration Cr [ppm] | Cr removed % |
|---|---|---|---|---|---|---|
| #11 | Reference | - | | - | 0.996- | - |
| #12 | SRCC (n. func.) | - | 1000 | - | 1.1 | 0 |
| #13 | GCC 2 (n. func.) | - | 5200 | | 0.996 | 0 |
| #14 | SRCC/elemental Fe | 7 | 1060 | | 0.926 | 6 |
| #15 | SRCC/elemental Fe | 8 | 1270 | | 0.641 | 35 |
| #16 | SRCC and elemental Fe separately | - | 1040 | 3370 | 0.980 | 1 |
| #17 | GCC/elemental Cu | 9 | 2540 | | 0.743 | 25 |
| #18 | GCC/elemental Mg | 10 | 10700 | | 0.011 | 99 |
| #19 | GCC/elemental Mn | 11 | 10900 | | 0.688 | 31 |
| #20 | GCC/elemental Zr | 12 | 10700 | | 0.950 | 5 |
| #21 | GCC/elemental Ag | 13 | 10400 | | 0.900 | 10 |
| #22 | GCC/elemental Zn | 14 | 10900 | | 0.897 | 10 |

### 5. Results

As can be gathered from tables 2 and 3, the functionalization of the mineral material with one or more reducing agents according to the present invention significantly improved the heavy metal contaminants removal efficiency over a corresponding particulate mineral material without functionalization. Furthermore, also reduction of the Cr(VI) ions to lower oxidation states is possible even if the reducing agent is immobilized on the surface of the particulate mineral material. This can especially be seen from examples #1 to #10. Furthermore, as can be seen from examples #11 to #22 the concept works with different Fe(II) salts, Mn(II) salts, Co(II) salts, elemental Cu, elemental Fe, elemental Mg, elemental Mn, elemental Zr, elemental Ag, and elemental Zn.

## Claims

1. Use of a particulate mineral material being functionalized with one or more reducing agents for lowering the amount of heavy metal contaminants from an aqueous medium,
wherein the mineral material is selected from the group consisting of hydromagnesite, calcium carbonate containing particulate material, bentonite, brucite, magnesite, dolomite and mixtures thereof,
wherein the reducing agent is selected from the group consisting of Fe(II) salts, Mn(II) salts, Co(II) salts, wherein the anion is selected from SO₄²⁻, C₂O₄²⁻, (NO₃)⁻, Cl⁻, Br or mixtures thereof, elemental Mg, elemental Ag, elemental Sn, elemental Al, elemental Cu, elemental Fe and mixtures thereof.

2. Use according to claim 1, wherein the heavy metal contaminates are in the form of cationic heavy metal ions and/or in the form of an anionic compound comprising said heavy metal.

3. Use according to claims 1 or 2, wherein the aqueous medium is selected from sewage water, preferably industrial sewage water, waste water, preferably waste water from the paper industry, waste water from the colour-, paints-, or coatings industry, waste water from breweries, waste water from the leather industry, agricultural waste water or slaughterhouse waste water, from sludge, preferably sewage sludge, harbour sludge, river sludge, coastal sludge, digested sludge, mining sludge, municipal sludge, civil engineering sludge, sludge from oil drilling or the effluents the aforementioned dewatered sludges.

4. Use according to any of the preceding claims, wherein the reducing agent is selected from the group consisting of Fe(II) salts, Mn(II) salts, Co(II) salts and mixtures thereof and preferably the group of Fe(II) salts and the anion is selected from SO₄²⁻, C₂O₄²⁻, (NO₃)⁻, Cl⁻, Br or mixtures thereof, more preferably the anion is SO₄²⁻, and most preferably the salt is FeSO₄.

5. Use according to any of the preceding claims, wherein the functionalized particulate mineral material comprises the reducing agent in an amount of 1 to 50 wt.-%, based on the total dry weight of the particulate mineral material, preferably 5 to 30 wt.-% and more preferably 10 to 20 wt.-%.

6. Use according to any of the preceding claims, wherein the particulate mineral material is selected from hydromagnesite, calcium carbonate containing particulate material or mixtures thereof, preferably is a calcium carbonate containing particulate material, more preferably is selected from SRCC (surface-reacted calcium carbonate), GCC (ground calcium carbonate), PCC (precipitated calcium carbonate) or mixtures thereof and most preferably is GCC (ground calcium carbonate).

7. Use according to any of the preceding claims, wherein the particulate mineral material prior to functionalization with said one or more reducing agents has a median particle diameter *d*₅₀ value of between 0.01 µm and 500 µm, preferably between 0.1 µm and 250 µm, more preferably between 0.5 µm and 150 µm and most preferably between 1 µm and 100 µm and/or
the particulate mineral material prior to functionalization with said one or more reducing agents has a specific surface area of from 0.5 to 250 m²/g, more preferably from 1 to 200 m²/g, even more preferably from 4 to 150 m²/g and most preferably from 10 to 80 m²/g.

8. Use according to any of the preceding claims, wherein the heavy metal contaminant is in the form of an anionic compound comprising said heavy metal wherein the heavy metal in the anionic compound is selected from the group consisting of Hg, Cr, As, Se, Mn and mixtures thereof, preferably is Hg(II), Cr(VI), As(V), Mn(VII), Se(VI) or mixtures thereof, even more preferably the anionic compound is CrO₄²⁻, Cr₂O₇²⁻, Cr₃O₁₀²⁻, Cr₄O₁₃²⁻, AsO₄³⁻, MnO₄²⁻, SeO₄²⁻, mixtures thereof and/or protonated versions thereof and most preferably is CrO₄²⁻, AsO₄³⁻, and/or protonated versions thereof.

9. Process for lowering the amount of heavy metal contaminants from an aqueous medium comprising the steps:
a) Providing an aqueous medium comprising heavy metal contaminants;
b) Functionalizing a particulate mineral material with one or more reducing agents selected from the group consisting of Fe(II) salts, Mn(II) salts, Co(II) salts, wherein the anion is selected from SO₄²⁻, C₂O₄²⁻, (NO₃)⁻, Cl⁻, Br or mixtures thereof, elemental Mg, elemental Ag, elemental Sn, elemental Al, elemental Cu, elemental Fe and mixtures thereof, wherein the mineral material is selected from the group consisting of hydromagnesite, calcium carbonate containing particulate material, bentonite, brucite, magnesite, dolomite and mixtures thereof;
c) Adding the functionalized particulate mineral material of step b) to the aqueous medium for scavenging the heavy metal contaminants and
d) Removing the functionalized particulate mineral material from the aqueous medium after step c).

10. The process according to claim 9, wherein the heavy metals in the heavy metal contaminants undergo a reduction reaction during step c).

11. The process according to claims 9 or 10, wherein the molar ratio of reducing agent to heavy metal contaminants in step c) is from 1:0.8 to 1:5000, preferably from 1:1 to 1:3000, more preferably from 1:2 to 1:1000, even more preferably from 1:3 to 1:500 and most preferably from 1:5 to 1:50.

12. The process according to claims 9 to 11, wherein the pH-value of the aqueous medium has been adjusted prior to the addition of the functionalized particulate mineral material to a value of 4 to 10, preferably 5 to 9 and most preferably 6 to 8.

13. The process according to claim 9 to 12, wherein the functionalization of the particulate mineral material of step b) is performed by the addition of Fe(II) salts, Mn(II) salts, Co(II) salts or mixtures thereof, wherein the anion is selected from SO₄²⁻, C₂O₄²⁻, (NO₃)⁻, Cl⁻, Br or mixtures thereof, and/or
by the addition of aluminum salts, magnesium salts, tin salts, silver salts, iron salts, copper salts and/or mixture thereof and reducing the aluminum salt, magnesium salt, tin salt, silver salt, iron salt, copper salts and/or mixture thereof present on the surface of the particulate mineral material with an electron donor agent.

14. Process for preparing a functionalized particulate mineral material comprising at least one reducing agent, which covers at least partially the surface of the particulate mineral material, wherein the reducing agent is elemental Al, elemental Sn, elemental Mg, elemental Ag, elemental Cu, elemental Fe or mixtures thereof comprising the steps of
i) Providing a particulate mineral material selected from the group consisting of hydromagnesite, calcium carbonate containing particulate material, bentonite, brucite, magnesite, dolomite and mixtures thereof,
ii) Providing an aluminum salt, magnesium salt, tin salt, silver salt, iron salt, copper salt and/or mixture thereof;
iii) Contacting the at least one particulate mineral material of step (i), the at least one aluminum salt, magnesium salt, tin salt, silver salt, iron salt and/or copper salt of step (ii), and optionally water, in one or several steps to form a mixture;
iv) Providing an electron donor agent;
v) Contacting the mixture of step iii) with the electron donor agent of step iv).

15. Scavenging complex comprising at least one heavy metal contaminant and at least one functionalized particulate mineral material obtained by the process as defined in claims 9 to 13.

## Patentansprüche

1. Verwendung eines partikelförmigen mineralischen Materials, das mit einem oder mehreren Reduktionsmitteln funktionalisiert ist, zur Verringerung der Menge an Schwermetallverunreinigungen aus einem wässrigen Medium,
wobei das mineralische Material ausgewählt ist aus der Gruppe bestehend aus Hydromagnesit, Calciumcarbonat-enthaltendem partikelförmigem Material, Bentonit, Brucit, Magnesit, Dolomit und Mischungen davon,
wobei das Reduktionsmittel ausgewählt ist aus der Gruppe bestehend aus Fe(II)-Salzen, Mn(II)-Salzen, Co(II)-Salzen, wobei das Anion ausgewählt ist aus SO₄²⁻, C₂O₄²⁻, (NO₃)⁻, Cl⁻, Br oder Mischungen davon, elementarem Mg, elementarem Ag, elementarem Sn, elementarem Al, elementarem Cu, elementarem Fe und Mischungen davon.

2. Verwendung nach Anspruch 1, wobei die Schwermetallverunreinigungen in Form von kationischen Schwermetallionen vorliegen und/oder in Form einer anionischen Verbindung, die das Schwermetall enthält.

3. Verwendung nach Anspruch 1 oder 2, wobei das wässrige Medium ausgewählt ist aus Abwasser, vorzugsweise Industrieabwasser, Schmutzwasser, vorzugsweise Schmutzwasser aus der Papierindustrie, Schmutzwasser aus der Farb-, Lack- oder Beschichtungsindustrie, Schmutzwasser aus Brauereien, Schmutzwasser aus der Lederindustrie, landwirtschaftliche Abwässer oder Schlachthofabwässer, aus Schlämmen, vorzugsweise Klärschlamm, Hafenschlamm, Flussschlamm, Küstenschlamm, Faulschlamm, Bergbauschlamm, kommunaler Klärschlamm, Tiefbauschlamm, Schlamm aus Ölbohrungen oder den Abläufen der vorgenannten, entwässerten Schlämme.

4. Verwendung nach einem der vorhergehenden Ansprüche, wobei das Reduktionsmittel ausgewählt ist aus der Gruppe bestehend aus Fe(II)-Salzen, Mn(II)-Salzen, Co(II)-Salzen und Mischungen davon, und vorzugsweise ist die Gruppe der Fe(II)-Salze und das Anion ausgewählt aus SO₄²⁻, C₂O₄²⁻, (NO₃)⁻, Cl⁻, Br oder Mischungen davon, besonders bevorzugt ist das Anion SO₄²⁻, und am meisten bevorzugt ist das Salz FeSO₄.

5. Verwendung nach einem der vorhergehenden Ansprüche, wobei das funktionalisierte, partikelförmige mineralische Material das Reduktionsmittel in einer Menge von 1 bis 50 Gew.-%, bezogen auf das Gesamttrockengewicht des partikelförmigen mineralischen Materials, vorzugsweise 5 bis 30 Gew.-% und besonders bevorzugt 10 bis 20 Gew.-%, umfasst.

6. Verwendung nach einem der vorhergehenden Ansprüche, wobei das partikelförmige mineralische Material ausgewählt ist aus Hydromagnesit, Calciumcarbonat-haltigem partikelförmigem Material oder Mischungen davon, vorzugsweise ein Calciumcarbonat-haltiges partikelförmiges Material ist, besonders bevorzugt ausgewählt ist aus SRCC (oberflächenreagiertem Calciumcarbonat), GCC (gemahlenem Calciumcarbonat), PCC (gefälltem Calciumcarbonat) oder Mischungen davon, und am meisten bevorzugt GCC (gemahlenes Calciumcarbonat) ist.

7. Verwendung nach einem der vorhergehenden Ansprüche, wobei das partikelförmige mineralische Material vor der Funktionalisierung mit dem einen oder den mehreren Reduktionsmitteln einen Median-Partikeldurchmesser *d*₅₀ von zwischen 0,01 µm und 500 µm, vorzugsweise zwischen 0,1 µm und 250 µm, besonders bevorzugt zwischen 0,5 µm und 150 µm und am meisten bevorzugt zwischen 1 µm und 100 µm aufweist und/oder
das partikelförmige mineralische Material vor der Funktionalisierung mit dem einen oder den mehreren Reduktionsmitteln eine spezifische Oberfläche von 0,5 bis 250 m²/g, besonders bevorzugt von 1 bis 200 m²/g, noch stärker bevorzugt von 4 bis 150 m²/g und am meisten bevorzugt von 10 bis 80 m²/g aufweist.

8. Verwendung nach einem der vorhergehenden Ansprüche, wobei die Schwermetallverunreinigung in Form einer anionischen Verbindung vorliegt, die das Schwermetall enthält, wobei das Schwermetall in der anionischen Verbindung ausgewählt ist aus der Gruppe bestehend aus Hg, Cr, As, Se, Mn und Mischungen davon, vorzugsweise Hg(II), Cr(VI), As(V), Mn(VII), Se(VI) oder Mischungen davon, besonders bevorzugt ist die anionische Verbindung CrO₄²⁻, Cr₂O₇²⁻, Cr₃O10²⁻, Cr₄O₁₃²⁻, AsO₄³⁻, MnO₄²⁻, SeO₄²⁻, Mischungen davon und/oder protonierte Versionen davon und ist am meisten bevorzugt CrO₄²⁻, AsO₄³⁻, und/oder protonierte Versionen davon.

9. Verfahren zur Verringerung der Menge an Schwermetallverunreinigungen aus einem wässrigen Medium, umfassend die Schritte:
a) Bereitstellen eines wässrigen Mediums, das Schwermetallverunreinigungen enthält;
b) Funktionalisieren eines partikelförmigen mineralischen Materials mit einem oder mehreren Reduktionsmitteln, ausgewählt aus der Gruppe bestehend aus Fe(II)-Salzen, Mn(II)-Salzen, Co(II)-Salzen, wobei das Anion ausgewählt ist aus SO₄²⁻, C₂O₄²⁻, (NO₃)⁻, Cl⁻, Br oder Mischungen davon, elementarem Mg, elementarem Ag, elementarem Sn, elementarem Al, elementarem Cu, elementarem Fe und Mischungen davon, wobei das mineralische Material ausgewählt ist aus der Gruppe bestehend aus Hydromagnesit, Calciumcarbonat-enthaltendem partikelförmigem Material, Bentonit, Brucit, Magnesit, Dolomit und Mischungen davon;
c) Zugabe des funktionalisierten, partikelförmigen mineralischen Materials aus Schritt b) zu dem wässrigen Medium, um die Schwermetallverunreinigungen abzufangen, und
d) Entfernen des funktionalisierten, partikelförmigen mineralischen Materials aus dem wässrigen Medium nach Schritt c).

10. Verfahren nach Anspruch 9, wobei die Schwermetalle in den Schwermetallverunreinigungen während Schritt c) eine Reduktionsreaktion durchlaufen.

11. Verfahren nach Anspruch 9 oder 10, wobei das molare Verhältnis von Reduktionsmittel zu Schwermetallverunreinigungen in Schritt c) von 1:0,8 bis 1:5000, vorzugsweise von 1:1 bis 1:3000, besonders bevorzugt von 1:2 bis 1:1000, noch stärker bevorzugt von 1:3 bis 1:500 und am meisten bevorzugt von 1:5 bis 1:50 beträgt.

12. Verfahren nach einem der Ansprüche 9 bis 11, wobei der pH-Wert des wässrigen Mediums vor der Zugabe des funktionalisierten, partikelförmigen mineralischen Materials auf einen Wert von 4 bis 10, vorzugsweise 5 bis 9 und am meisten bevorzugt 6 bis 8 eingestellt wurde.

13. Verfahren nach einem der Ansprüche 9 bis 12, wobei die Funktionalisierung des partikelförmigen mineralischen Materials von Schritt b) durch die Zugabe von Fe(II)-Salzen, Mn(II)-Salzen, Co(II)-Salzen oder Mischungen davon durchgeführt wird, wobei das Anion ausgewählt ist aus SO₄²⁻, C₂O₄²⁻, (NO₃)⁻, Cl⁻, Br oder Mischungen davon, und/oder
durch Zugabe von Aluminiumsalzen, Magnesiumsalzen, Zinnsalzen, Silbersalzen, Eisensalzen, Kupfersalzen und/oder Mischungen davon und Reduktion des Aluminiumsalzes, Magnesiumsalzes, Zinnsalzes, Silbersalzes, Eisensalzes, Kupfersalzes und/oder einer Mischung davon, das/die auf der Oberfläche des partikelförmigen mineralischen Materials vorhanden ist, mit einem Elektronendonator.

14. Verfahren zur Herstellung eines funktionalisierten, partikelförmigen mineralischen Materials, umfassend mindestens ein Reduktionsmittel, das mindestens teilweise die Oberfläche des partikelförmigen mineralischen Materials bedeckt, wobei das Reduktionsmittel elementares Al, elementares Sn, elementares Mg, elementares Ag, elementares Cu, elementares Fe oder Mischungen davon ist, umfassend die Schritte
i) Bereitstellen eines partikelförmigen mineralischen Materials, ausgewählt aus der Gruppe bestehend aus Hydromagnesit, Calciumcarbonat enthaltendem partikelförmigen Material, Bentonit, Brucit, Magnesit, Dolomit und Mischungen davon,
ii) Bereitstellen eines Aluminiumsalzes, Magnesiumsalzes, Zinnsalzes, Silbersalzes, Eisensalzes, Kupfersalzes und/oder einer Mischung davon;
iii) Inkontaktbringen des mindestens einen partikelförmigen mineralischen Materials von Schritt (i), des mindestens einen Aluminiumsalzes, Magnesiumsalzes, Zinnsalzes, Silbersalzes, Eisensalzes und/oder Kupfersalzes von Schritt (ii) und gegebenenfalls Wasser in einem oder mehreren Schritten, um eine Mischung zu bilden;
iv) Bereitstellen eines Elektronendonators;
v) Inkontaktbringen der Mischung von Schritt iii) mit dem Elektronendonator von Schritt iv).

15. Fänger-Komplex, der mindestens eine Schwermetallverunreinigung und mindestens ein funktionalisiertes, partikelförmiges mineralisches Material enthält, das nach dem Verfahren gemäß den Ansprüchen 9 bis 13 erhalten wurde.

## Revendications

1. Utilisation d'une matière minérale particulaire fonctionnalisée par un ou plusieurs agents réducteurs pour réduire la quantité de contaminants métalliques lourds d'un milieu aqueux,
dans laquelle la matière minérale est choisie dans le groupe constitué par l'hydromagnésite, une matière particulaire contenant du carbonate de calcium, la bentonite, la brucite, la magnésite, la dolomite et des mélanges de ceux-ci,
dans laquelle l'agent réducteur est choisi dans le groupe constitué par les sels de Fe(II), les sels de Mn(II), les sels de Co(II), dans lesquels l'anion est choisi parmi SO₄²⁻, C₂O₄²⁻, (NO₃)⁻, Cl⁻, Br⁻ ou des mélanges de ceux-ci, le Mg élémentaire, l'Ag élémentaire, le Sn élémentaire, l'Al élémentaire, le Cu élémentaire, le Fe élémentaire et des mélanges de ceux-ci.

2. Utilisation selon la revendication 1, dans laquelle les contaminants métalliques lourds se présentent sous la forme d'ions de métaux lourds cationiques et/ou sous la forme d'un composé anionique comprenant ledit métal lourd.

3. Utilisation selon les revendications 1 ou 2, dans laquelle le milieu aqueux est choisi parmi les eaux d'épuration, de préférence les eaux d'épuration industrielles, les eaux usées, de préférence les eaux usées de l'industrie papetière, les eaux usées de l'industrie des couleurs, des peintures ou des revêtements, les eaux usées des brasseries, les eaux usées de l'industrie du cuir, les eaux usées agricoles ou les eaux usées d'abattoirs, parmi les boues, de préférence les boues d'épuration, les boues portuaires, les boues fluviales, les boues côtières, les boues digérées, les boues minières, les boues municipales, les boues de génie civil, les boues de forage pétrolier ou les effluents des boues déshydratées précitées.

4. Utilisation selon l'une quelconque des revendications précédentes, dans laquelle l'agent réducteur est choisi dans le groupe constitué par les sels de Fe(II), les sels de Mn(II), les sels de Co(II) et des mélanges de ceux-ci et de préférence le groupe des sels de Fe(II) et l'anion est choisi parmi SO₄²⁻, C₂O₄²⁻, (NO₃)⁻, Cl⁻, Br⁻ou des mélanges de ceux-ci, plus préférablement l'anion est SO₄²⁻ et de manière préférée entre toutes le sel est FeSO₄

5. Utilisation selon l'une quelconque des revendications précédentes, dans laquelle la matière minérale particulaire fonctionnalisée comprend l'agent réducteur en une quantité de 1 à 50 % en poids, en se basant sur le poids sec total de la matière minérale particulaire, de préférence de 5 à 30 % en poids et plus préférablement de 10 à 20 % en poids.

6. Utilisation selon l'une quelconque des revendications précédentes, dans la matière minérale particulaire est choisie parmi l'hydromagnésite, une matière particulaire contenant du carbonate de calcium ou des mélanges de ceux-ci, de préférence une matière particulaire contenant du carbonate de calcium, plus préférablement est choisie parmi le SRCC (carbonate de calcium traité par réaction en surface), le GCC (carbonate de calcium broyé), le PCC (carbonate de calcium précipité) ou des mélanges de ceux-ci, et de manière préférée entre toutes est le GCC (carbonate de calcium broyé).

7. Utilisation selon l'une quelconque des revendications précédentes, dans laquelle la matière minérale particulaire avant fonctionnalisation avec ledit un ou plusieurs agents réducteurs a une valeur de diamètre particulaire médian d*₅₀* comprise entre 0,01 µm et 500 µm, de préférence entre 0,1 µm et 250 µm, plus préférablement entre 0,5 µm et 150 µm et de manière préférée entre toutes entre 1 µm et 100 µm, et/ou la matière minérale particulaire avant fonctionnalisation avec ledit un ou plusieurs agents réducteurs a une surface spécifique de 0,5 et 250 m²/g, plus préférablement de 1 à 200 m²/g, encore plus préférablement de 4 à 150 m²/g, et de manière préférée entre toutes de 10 à 80 m²/g.

8. Utilisation selon l'une quelconque des revendications précédentes, dans laquelle le contaminant métallique lourd se présente sous la forme d'un composé anionique comprenant ledit métal lourd dans laquelle le métal lourd dans le composé anionique est choisi dans le groupe constitué par Hg, Cr, As, Se, Mn et des mélanges de ceux-ci, de préférence est Hg(II), Cr(VI), As(V), Mn(VII), Se(VI) ou des mélanges de ceux-ci, de préférence encore le composé anionique est CrO₄²⁻, Cr₂O₇²⁻, Cr₃O₁₀²⁻, Cr₄O₁₃²⁻, AsO₄³⁻, MnO₄²⁻, SeO₄²⁻, des mélanges de ceux-ci et/ou des versions protonées de ceux-ci et de manière préférée entre toutes est CrO₄²⁻, AsO₄³⁻ et/ou des versions protonées de ceux-ci.

9. Procédé de réduction de la quantité de contaminants métalliques lourds d'un milieu aqueux, comprenant les étapes consistant à :
a) fournir un milieu aqueux contenant des contaminants métalliques lourds ;
b) fonctionnaliser une matière minérale particulaire avec un ou plusieurs agents réducteurs choisis dans le groupe constitué par les sels de Fe(II), les sels de Mn(II), les sels de Co(II), dans lesquels l'anion est choisi parmi SO₄²⁻, C₂O₄²⁻, (NO₃)⁻, Cl⁻, Br⁻ ou des mélanges de ceux-ci, le Mg élémentaire, l'Ag élémentaire, le Sn élémentaire, l'Al élémentaire, le Cu élémentaire, le Fe élémentaire et des mélanges de ceux-ci, dans lequel la matière minérale est choisie dans le groupe constitué par l'hydromagnésite, une matière particulaire contenant du carbonate de calcium, la bentonite, la brucite, la magnésite, la dolomite et des mélanges de ceux-ci ;
c) ajouter la matière minérale particulaire fonctionnalisée de l'étape b) au milieu aqueux pour piéger les contaminants métalliques lourds et
d) éliminer la matière minérale particulaire fonctionnalisée du milieu aqueux après l'étape c).

10. Procédé selon la revendication 9, dans lequel les métaux lourds dans les contaminants métalliques lourds subissent une réaction de réduction lors de l'étape c).

11. Procédé selon les revendications 9 ou 10, dans lequel le rapport molaire de l'agent réducteur aux contaminants métalliques lourds à l'étape c) est de 1:0,8 à 1:5000, de préférence de 1:1 à 1:3000, plus préférablement de 1:2 à 1:1000, encore plus préférablement de 1:3 à 1:500 et de manière préférée entre toutes de 1:5 à 1:50.

12. Procédé selon l'une quelconque des revendications 9 à 11, dans lequel la valeur de pH du milieu aqueux a été ajustée avant l'ajout de la matière minérale particulaire fonctionnalisée à une valeur de 4 à 10, de préférence 5 à 9 et de manière préférée entre toutes 6 à 8.

13. Procédé selon l'une quelconque des revendications 9 à 12, dans lequel la fonctionnalisation de la matière minérale particulaire de l'étape b) est réalisée par ajout de sels de Fe(II), de sels de Mn(II), de sels de Co(II) ou de mélanges de ceux-ci, dans lequel l'anion est choisi parmi SO₄²⁻, C₂O₄²⁻, (NO₃)⁻, Cl⁻, Br⁻ ou des mélanges de ceux-ci, et/ou
par l'ajout de sels d'aluminium, de sels de magnésium, de sels d'étain, de sels d'argent, de sels de fer, de sels de cuivre et/ou d'un mélange de ceux-ci et réduction des sels d'aluminium, des sels de magnésium, des sels d'étain, des sels d'argent, des sels de fer, des sels de cuivre et/ou d'un mélange de ceux-ci présents sur la surface de la matière minérale particulaire avec un agent donneur d'électrons.

14. Procédé de préparation d'une matière minérale particulaire fonctionnalisée comprenant au moins un agent réducteur, qui couvre au moins partiellement la surface de la matière minérale particulaire, dans lequel l'agent réducteur est l'Al élémentaire, le Sn élémentaire, le Mg élémentaire, l'Ag élémentaire, le Cu élémentaire, le Fe élémentaire ou des mélanges de ceux-ci comprenant les étapes consistant à :
i) fournir une matière minérale particulaire choisie dans le groupe constitué par l'hydromagnésite, une matière particulaire contenant du carbonate de calcium, la bentonite, la brucite, la magnésite, la dolomite et des mélanges de ceux-ci,
ii) fournir un sel d'aluminium, un sel de magnésium, un sel d'étain, un sel d'argent, un sel de fer, un sel de cuivre et/ou un mélange de ceux-ci ;
iii) mettre en contact l'au moins une matière minérale particulaire de l'étape (i), l'au moins un sel d'aluminium, sel de magnésium, sel d'étain, sel d'argent, sel de fer et/ou sel de cuivre de l'étape (ii), et éventuellement de l'eau, en une ou plusieurs étapes pour former un mélange ;
iv) fournir un agent donneur d'électrons ;
v) mettre en contact le mélange de l'étape iii) avec l'agent donneur d'électrons de l'étape iv).

15. Complexe de piégeage comprenant au moins un contaminant métallique lourd et au moins une matière minérale particulaire fonctionnalisée obtenue par le procédé tel que défini dans les revendications 9 à 13.
